# EUROPEAN PATENT APPLICATION

(11) **EP 4 344 986 A1**
(43) Date of publication of application: **03.04.2024**
(21) Application number: 23199199.3
(22) Date of filing: 22.09.2023
(51) Int. Cl.: B62D 25/04, B62D 25/08, B62D 25/20

(54) **VEHICLE HAVING A VEHICLE BODY STRUCTURE COMPRISING A REINFORCING MEMBER**

(30) Priority: 30.09.2022 CN 202211209586
(71) Applicant: Stellantis Auto SAS, 78300 Poissy (FR)
(72) Inventor: LI, SHANGHUI, Shanghai, 200120 (CN); ZHANG, FANHUI, Shanghai, 200120 (CN); FAN, CHUNMEI, SHANGHAI, 200233 (CN); ZHU, YIPENG, SHANGHAI, 200120 (CN); LI, YAN, SHANGHAI, 201600 (CN)

(57) **Abstract**

The present disclosure relates to a vehicle having a body structure comprising a reinforcing member. The body structure comprises: an inner panel assembly (1) of a C-pillar; an outer panel assembly (2) of a lateral body, connected to an outer side of the inner panel assembly of the C-pillar; a floor assembly (3), connected to an inner side of the inner panel assembly of the C-pillar; an inner panel (4) of a rear body, connected to a rear side of each of the inner panel assembly of the C-pillar and the floor assembly, and to an inner side of the outer panel assembly of the lateral body; and a reinforcing member (5) connected to each of the inner panel assembly (1) of the C-pillar, the outer panel assembly (2) of the lateral body, the floor assembly (3), and the inner panel (4) of the rear body.

## Description

### RELATED FIELD

The present disclosure generally relates to the technical field of vehicle components, and more particularly, to a vehicle having a body structure comprising a reinforcing member.

### BACKGROUND

Torsional performance (torsional rigidity) of a vehicle body is one of key standards for evaluating performance of a vehicle. The torsional performance of the vehicle body plays the following roles.

1. As a frame of the vehicle, the vehicle body has to present excellent torsional performance to provide reliable and stable support for all of vehicle components and systems mounted to the vehicle body, and to avoid excessive vibration and noise.

2. The vehicle body is a bridge connecting a front suspension to a rear suspension. The torsional performance of the vehicle body will affect a response time of the vehicle to a driver's control instruction. A good torsional performance of the vehicle body will shorten the response time and provide a passenger with a comfortable and reliable travel feeling.

3. The good torsional performance of the vehicle body indicates that load distribution of the vehicle body under a torsional condition is favorable and uniform, thereby avoiding a fatigue failure caused by a local concentration of load and prolonging the service life of the vehicle body.

In a vehicle structure, the lateral-rear portion of the body is generally formed by a plurality of parts, such as an inner panel assembly of a C-pillar, an outer panel assembly of a lateral body, a floor assembly and an inner panel of a rear body, through welding. Thus, the torsional performance of the lateral-rear portion of the body is particularly important. If an additional reinforcing member is provided at each of positions with a poor torsional rigidity, it will lead to an excessive number of members, a high cost, and an inconvenient assembling for the body.

### SUMMARY

The present disclosure aims to overcome the defects presented in the prior art by providing a vehicle having a body structure comprising a reinforcing member, wherein the body structure improves the torsional performance of the rear portion of the body, and has fewer members, is easy to assemble, and has a low cost.

To this end, the present disclosure provides a vehicle having a body structure comprising: an inner panel assembly of a C-pillar; an outer panel assembly of a lateral body, connected to an outer side of the inner panel assembly of the C-pillar; a floor assembly, connected to an inner side of the inner panel assembly of the C-pillar; an inner panel of a rear body, connected to a rear side of each of the inner panel assembly of the C-pillar and the floor assembly, and to an inner side of the outer panel assembly of the lateral body; and a reinforcing member connected to each of the inner panel assembly of the C-pillar, the outer panel assembly of the lateral body, the floor assembly and the inner panel of the rear body.

According to an alternative embodiment of the present disclosure, the reinforcing member is arranged such that each of connecting portions of the reinforcing member connected to the inner panel assembly of the C-pillar, the outer panel assembly of the lateral body, the floor assembly and the inner panel of the rear body extends perpendicular to a longitudinal-transverse plane of the vehicle.

According to an alternative embodiment of the present disclosure, the inner panel assembly of the C-pillar comprises a C-pillar inner panel, and the reinforcing member comprises a first connecting portion connected to the C-pillar inner panel.

According to an alternative embodiment of the present disclosure, the inner panel assembly of the C-pillar further comprises a parcel-shelf reinforcing panel connected to the C-pillar inner panel, and the reinforcing member comprises a second connecting portion connected to the parcel-shelf reinforcing panel.

According to an alternative embodiment of the present disclosure, the outer panel assembly of the lateral body comprises a lateral-body outer panel and a gutter connected to the lateral-body outer panel, and the reinforcing member comprises a third connecting portion connected to the gutter.

According to an alternative embodiment of the present disclosure, the outer panel assembly of the lateral body further comprises a taillight mounting panel connected to each of the lateral-body outer panel, the gutter and the inner panel of the rear body, and the reinforcing member comprises a fourth connecting portion connected to the taillight mounting panel.

According to an alternative embodiment of the present disclosure, the inner panel assembly of the C-pillar comprises a rear-fender reinforcing panel, the floor assembly comprises a rear wheel cover and an extension panel connected to the rear wheel cover, and the reinforcing member comprises a fifth connecting portion sandwiched between the rear-fender reinforcing panel and the extension panel.

According to an alternative embodiment of the present disclosure, the reinforcing member comprises a sixth connecting portion connected to the inner panel of the rear body and arranged to extend along a transverse-vertical plane of the vehicle.

According to an alternative embodiment of the present disclosure, the reinforcing member is welded to each of the inner panel assembly of the C-pillar, the outer panel assembly of the lateral body, the floor assembly and the inner panel of the rear body.

The vehicle having the body structure comprising the reinforcing member according to the present disclosure has various beneficial effects, in particular: by arranging the reinforcing member connected to a plurality of vehicle body parts, such as the inner panel assembly of the C-pillar, the outer panel assembly of the lateral body, the floor assembly and the inner panel of the rear body, the connection strength between these body parts is effectively enhanced, and the torsional performance of the rear portion of the body is improved; in addition, the application of the single reinforcing member with a large dimension will neither excessively increase the number or cost of body members, nor hinder the assembling of the body parts.

### BRIEF DESCRIPTION OF THE DRAWINGS

Other features and advantages of the present disclosure will be readily understood through the following preferred embodiments described in detail with reference to the accompanying drawings, in which a same reference numeral indicates a same or similar component.
FIG. 1 is a partial schematic view of a body structure of a vehicle according to the present disclosure;
FIG. 2 is a structural schematic view of a reinforcing member of the body structure shown in FIG. 1;
FIG. 3 is a structural schematic view of the reinforcing member shown in FIG. 2, viewed from another perspective;
FIG. 4 is a partial schematic view of a top portion of the body structure shown in FIG. 1; and
FIG. 5 is a partial schematic view of a bottom portion of the body structure shown in FIG. 1.

It is conceivable that the drawings are not only used to explain the present disclosure, but also help to define the present disclosure when necessary.

### DETAILED DESCRIPTION

The implementation and usage of the embodiments are discussed in detail below. However, it is conceivable that the specific embodiments discussed herein are merely intended to illustrate specific ways of implementing and using the present disclosure, and are not intended to limit the protection scope of the present disclosure.

In the specification, when describing structures and positions of components, the directional expressions such as "up", "down", "left", "right", "front", "rear", "inner", "outer" are defined with reference to the orientations of the vehicle.

In the drawings, the X direction corresponds to the longitudinal direction of the vehicle (i.e., the front-rear direction), the Y direction corresponds to the transverse direction of the vehicle (i.e., the left-right direction), and the Z direction corresponds to the vertical direction of the vehicle (i.e., the up-down direction).

In addition, in the specification, the terms, such as "mounted to" and "connected to", should be understood in a broad sense unless otherwise specified and defined. For example, "connected to" may be "directly connected to" or "indirectly connected to... by an intermediate member". For those skilled in the art, the specific meanings of the above terms in the specification can be understood according to specific circumstances.

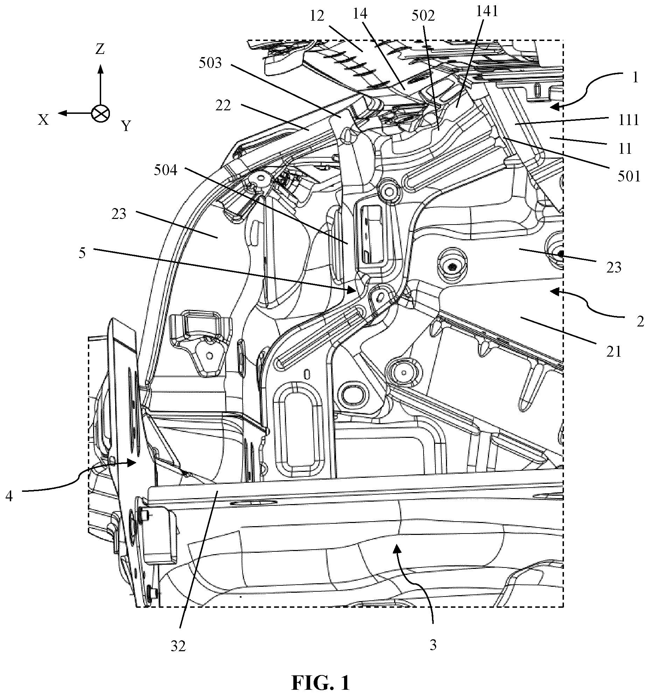

A preferred embodiment of a body structure of a vehicle according to the present disclosure is described below with reference to FIGS. 1 to 5. The body structure refers to a lateral-rear structure of the vehicle body, and the structure shown in the figures is a left-rear structure of the vehicle body. The right-rear structure of the vehicle body is symmetrical with the left-rear structure, and is not shown in detail.

As shown in FIGS. 1 to 5, the body structure mainly comprises body parts, such as an inner panel assembly 1 of a C-pillar, an outer panel assembly 2 of a lateral body, a floor assembly 3 and an inner panel 4 of a rear body, as well as a single reinforcing member 5. The reinforcing member 5 is connected, for example by welding, to each of the inner panel assembly 1 of the C-pillar, the outer panel assembly 2 of the lateral body, the floor assembly 3 and the inner panel 4 of the rear body, so as to enhance the connection strength between these body parts and improve the torsional performance of the rear portion of the body.

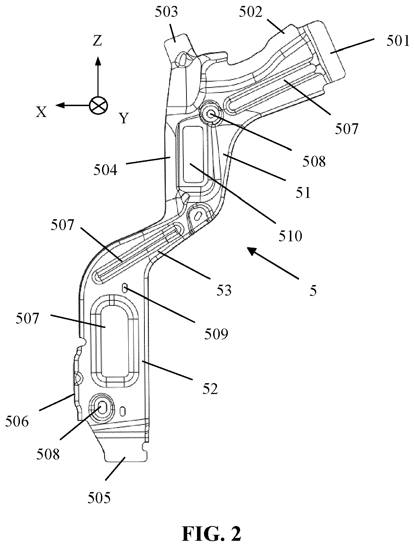

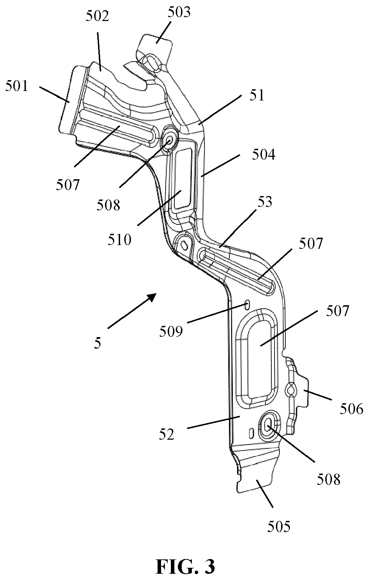

As shown in FIGS. 2 and 3, the reinforcing member 5 comprises a reinforcing-member upper portion 51, a reinforcing-member lower portion 52, and a reinforcing-member intermediate portion 53 connecting the reinforcing-member upper portion 51 to the reinforcing-member lower portion 52, so as to be configured as a curved shape as shown. The reinforcing-member upper portion 51 comprises a first connecting portion 501, a second connecting portion 502, a third connecting portion 503 and a fourth connecting portion 504 arranged along its edge, wherein the first connecting portion 501 and the second connecting portion 502 are arranged at the front end of the reinforcing-member upper portion 51 to be connected to the inner panel assembly 1 of the C-pillar, and the third connecting portion 503 and the fourth connecting portion 504 are arranged at the rear end of the reinforcing-member upper portion 51 to be connected to the outer panel assembly 2 of the lateral body. The reinforcing-member lower portion 52 comprises a fifth connecting portion 505 and a sixth connecting portion 506 arranged along its edge, wherein the fifth connecting portion 505 is arranged at the bottom end of the reinforcing-member lower portion 52 to be connected to the floor assembly 3, and the sixth connecting portion 506 is arranged at the rear end of the reinforcing-member lower portion 52 to be connected to the inner panel 4 of the rear body. It is conceivable that the particular curved shape of the reinforcing member 5 is for matching the shapes of these corresponding body parts, and the specific shape of the reinforcing member 5 is not limited herein, as long as it can ensure the above-mentioned connections.

The connection between each of the first connecting portion 501 to the sixth connecting portion 506 of the reinforcing member 5 and the corresponding body part is generally achieved by welding. Preferably, each of the first connecting portion 501 to the sixth connecting portion 506 of the reinforcing member 5 is arranged to extend substantially perpendicular to the XY plane of the vehicle, so as to provide freedom in the Z direction during welding, thereby avoiding difficult assembling of the body structure due to manufacturing tolerances or the like.

As shown in FIGS. 1, 4 and 5, the inner panel assembly 1 of the C-pillar comprises a C-pillar inner panel 11 and a rear-fender (rear) reinforcing panel 15 welded to a lower portion of the C-pillar inner panel 11. A reinforcing-member welding portion 111 that protrudes slightly inwards is formed at a rear edge of the C-pillar inner panel 11, such that the first connecting portion 501 of the reinforcing member 5 extending substantially along the XZ plane can be welded to the outer side of the reinforcing-member welding portion 111.

Further, in the illustrated embodiment, a Y-directional end of a parcel shelf 12 (also called "a coat shelf" or "a rear shelf") of the vehicle is welded to a gutter 22 of the outer panel assembly 2 of the lateral body, and is connected to the C-pillar inner panel 11 via a parcel-shelf extension panel 13. In order to enhance the connection strength between the parcel shelf 12 and the gutter 22, the body structure further comprises a parcel-shelf reinforcing panel 14 connected to the C-pillar inner panel 11, for example, via the parcel-shelf extension panel 13, and welded to the parcel shelf 12 and the gutter 22. Thus, the parcel-shelf extension panel 13 and the parcel-shelf reinforcing panel 14 may form a part of the inner panel assembly 1 of the C-pillar. The parcel-shelf reinforcing panel 14 comprises a welding lap 141 bent downwards, such that it can be welded to the inner side of the second connecting portion 502 of the reinforcing member 5 extending substantially along the XZ plane via the welding lap 141.

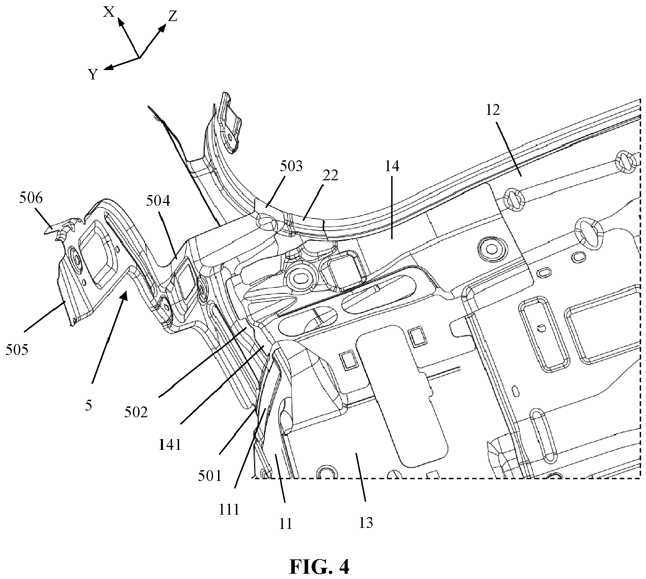

As shown in FIGS. 1 and 4, the outer panel assembly 2 of the lateral body comprises a lateral-body outer panel 21 welded to the outer side of the C-pillar inner panel 11, and the gutter 22 and a taillight mounting panel 23 (for mounting a taillight housing, and also called "a taillight inner panel"), each of which is welded to the rear of the lateral-body outer panel 21. The top of the taillight mounting panel 23 is welded to the gutter 22, and the bottom of the taillight mounting panel 23 is welded to the inner panel 4 of the rear body. The third connecting portion 503 of the reinforcing member 5 can be welded to a rear edge of the gutter 22 in a direction substantially perpendicular to the XY plane, and the fourth connecting portion 504 of the reinforcing member 5 extending substantially along the XZ plane can be welded to the inner side of the taillight mounting panel 23.

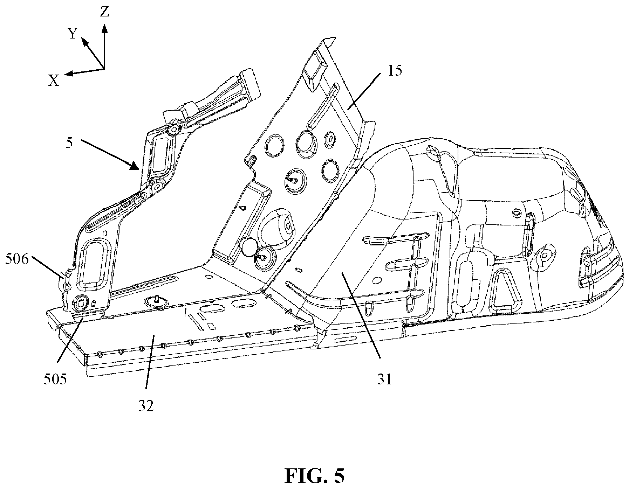

As shown in FIGS. 1 and 5, the floor assembly 3 comprises a rear wheel cover 31 and an extension panel 32 welded to the rear side of the rear wheel cover 31. The rear wheel cover 31 is welded to the inner side of each of the C-pillar inner panel 11 and the rear-fender reinforcing panel 15, and the extension panel 32 is welded to the inner side of the rear-fender reinforcing panel 15, such that the fifth connecting portion 505 of the reinforcing member 5 extending substantially along the XZ plane can be sandwiched between the rear-fender reinforcing panel 15 and the extension panel 32 to be welded to the rear-fender reinforcing panel 15 and the extension panel 32.

The inner panel 4 of the rear body extends substantially along the YZ plane to be welded to the rear side of each of the rear-fender reinforcing panel 15 and the extension panel 32 and to the inner side of the lateral-body outer panel 21. Thus, the sixth connecting portion 506 of the reinforcing member 5 also needs to be arranged to extend substantially along the YZ plane to be welded to the front side of the inner panel 4 of the rear body.

In addition, as shown in FIGS. 2 and 3, the reinforcing member 5 is provided with at least one reinforcing rib 507, for example, three reinforcing ribs 507 as shown in the figures and respectively arranged on the reinforcing-member upper portion 51, the reinforcing-member lower portion 52, and the reinforcing-member intermediate portion 53. For example, these reinforcing ribs 507 may be protrusions integrally formed on the surface of the reinforcing member 5, and have an elongated or oblong shape. In addition, the reinforcing member 5 is provided with a plurality of holes, such as positioning holes 508 for positioning a welding tool, wire harness holes 509 allowing a wire harness to pass through, and weight reducing holes 510. The shapes and positions of these holes are not limited herein and can be determined according to actual needs.

The assembling process of the body structure of the vehicle according to the present disclosure is briefly described below.
1. The assembled inner panel assembly 1 of the C-pillar is provided; then, the first connecting portion 501 of the reinforcing member 5 is welded to the C-pillar inner panel 11, the second connecting portion 502 of the reinforcing member 5 is welded to the parcel-shelf reinforcing panel 14, and the fifth connecting portion 505 of the reinforcing member 5 is pre-welded to the rear-fender reinforcing panel 15, such that the reinforcing member 5 is connected to the inner panel assembly 1 of the C-pillar.
2. The assembled outer panel assembly 2 of the lateral body is provided and welded to the outer side of the inner panel assembly 1 of the C-pillar; meanwhile, the third connecting portion 503 of the reinforcing member 5 is welded to the gutter 22, and the fourth connecting portion 504 of the reinforcing member 5 is welded to the taillight mounting panel 23, such that the reinforcing member 5 is connected to the outer panel assembly 2 of the lateral body.
3. The assembled floor assembly 3 is provided and welded to the inner side of the inner panel assembly 1 of the C-pillar, and an inner panel 4 of the rear body is provided and welded to the rear side of each of the inner panel assembly 1 of the C-pillar and the floor assembly 3 and to the inner side of the outer panel assembly 2 of the lateral body; meanwhile, the fifth connecting portion 505 of the reinforcing member 5 is welded between the rear-fender reinforcing panel 15 and the extension panel 32, such that the reinforcing member 5 is connected to the floor assembly 3; and the sixth connecting portion 506 of the reinforcing member 5 is welded to the inner panel 4 of the rear body, thereby completing the assembling of the entire body structure.

Thus, the reinforcing member 5 enhances the connection strength between these body parts, and improves the torsional performance of the rear portion of the body. For example, the 1^{st} dynamic torsion modality is improved by about 0.42 Hz. In addition, the single reinforcing member 5 does not excessively increase the number or cost of body members, and the configuration of the connecting portions of the reinforcing member 5 does not hinder the assembling of the body parts either.

The technical contents and features of the present disclosure have been disclosed above. However, it is conceivable that those skilled in the art can make various changes and improvements to the above-disclosed conception under the creative concept of the present disclosure, and all these various changes and improvements fall within the protection scope of the present disclosure.

The description of the above embodiments is exemplary rather than limitative, and the protection scope of the present disclosure is defined by the appended claims.

## Claims

1. A vehicle having a body structure comprising:
an inner panel assembly (1) of a C-pillar;
an outer panel assembly (2) of a lateral body, connected to an outer side of the inner panel assembly (1) of the C-pillar;
a floor assembly (3), connected to an inner side of the inner panel assembly (1) of the C-pillar; and
an inner panel (4) of a rear body, connected to a rear side of each of the inner panel assembly (1) of the C-pillar and the floor assembly (3), and to an inner side of the outer panel assembly (2) of the lateral body,
wherein the body structure further comprises a reinforcing member (5) connected to each of the inner panel assembly (1) of the C-pillar, the outer panel assembly (2) of the lateral body, the floor assembly (3) and the inner panel (4) of the rear body.

2. The vehicle according to claim 1, wherein the reinforcing member (5) is arranged such that each of connecting portions of the reinforcing member (5) connected to the inner panel assembly (1) of the C-pillar, the outer panel assembly (2) of the lateral body, the floor assembly (3) and the inner panel (4) of the rear body extends perpendicular to a longitudinal-transverse plane of the vehicle.

3. The vehicle according to claim 1 or 2, wherein the inner panel assembly (1) of the C-pillar comprises a C-pillar inner panel (11), and wherein the reinforcing member (5) comprises a first connecting portion (501) connected to the C-pillar inner panel (11).

4. The vehicle according to claim 3, wherein the inner panel assembly (1) of the C-pillar further comprises a parcel-shelf reinforcing panel (14) connected to the C-pillar inner panel (11), and wherein the reinforcing member (5) comprises a second connecting portion (502) connected to the parcel-shelf reinforcing panel (14).

5. The vehicle according to claim 1 or 2, wherein the outer panel assembly (2) of the lateral body comprises a lateral-body outer panel (21) and a gutter (22) connected to the lateral-body outer panel (21), and wherein the reinforcing member (5) comprises a third connecting portion (503) connected to the gutter (22).

6. The vehicle according to claim 5, wherein the outer panel assembly (2) of the lateral body further comprises a taillight mounting panel (23) connected to each of the lateral-body outer panel (21), the gutter (22) and the inner panel (4) of the rear body, and wherein the reinforcing member (5) comprises a fourth connecting portion (504) connected to the taillight mounting panel (23).

7. The vehicle according to claim 1 or 2, wherein the inner panel assembly (1) of the C-pillar comprises a rear-fender reinforcing panel (15), wherein the floor assembly (3) comprises a rear wheel cover (31) and an extension panel (32) connected to the rear wheel cover (31), and wherein the reinforcing member (5) comprises a fifth connecting portion (505) sandwiched between the rear-fender reinforcing panel (15) and the extension panel (32).

8. The vehicle according to claim 1 or 2, wherein the reinforcing member (5) comprises a sixth connecting portion (506) connected to the inner panel (4) of the rear body and arranged to extend along a transverse-vertical plane of the vehicle.

9. The vehicle according to claim 1 or 2, wherein the reinforcing member (5) is welded to each of the inner panel assembly (1) of the C-pillar, the outer panel assembly (2) of the lateral body, the floor assembly (3) and the inner panel (4) of the rear body.
